# EUROPÄISCHE PATENTSCHRIFT

(11) **EP 3 237 779 B1**
(45) Veröffentlichungstag und Bekanntmachung des Hinweises auf die Patenterteilung: **09.01.2019**
(21) Anmeldenummer: 15812949.4
(22) Anmeldetag: 18.11.2015
(51) Int. Cl.: F16H 57/04, F16H 25/20

(54) **SPINDELANTRIEB MIT EINEM GEHÄUSE, EINER SPINDEL, UND EINER MIT DER SPINDEL IN WIRKVERBINDUNG STEHENDEN SPINDELMUTTER**
DRIVE SHAFT TRANSMISSION WITH A HOUSING, A SPINDLE, AND A NUT IN INTERACTION WITH THE SPINDLE
TRANSMISSION À VIS AVEC UN BOÎTIER, UNE VIS ET UN ÉCROU EN CONNEXION AVEC LA VIS

(30) Priorität: 22.12.2014 DE 102014018919; 20.01.2015 DE 102015000358
(43) Veröffentlichungstag der Anmeldung: 01.11.2017
(73) Patentinhaber: Sew-Eurodrive GmbH & Co. KG, 76646 Bruchsal (DE)
(72) Erfinder: DITTES, Gerhard, 75053 Gondelsheim (DE)
(86) Internationale Anmeldenummer: PCT/EP2015/002310
(87) Internationale Veröffentlichungsnummer: WO 2016/102036

(56) Entgegenhaltungen:
- EP-A1- 2 194 295
- DE-A1-102006 043 599
- DE-U1-202006 003 130
- US-A1- 2012 227 522

## Beschreibung

Die Erfindung betrifft einen Spindelantrieb mit einem Gehäuse, einer Spindel, und einer mit der Spindel in Wirkverbindung stehenden Spindelmutter.

Es ist allgemein bekannt, dass bei einem Spindeltrieb die Spindelmutter entlang der Achse einer mit der Spindelmutter im Eingriff stehenden Spindel hin- und herbewegbar ist.

Aus der US 2012/2275522 A1 ist als nächstliegender Stand der Technik ein Hochlastlinearaktuator bekannt.

Aus der EP 2 194 295 A1 ist eine elektromotorische Antriebseinheit bekannt.

**Aus der** DE 20 2006 003130 U1 ist ein Linearantrieb bekannt.

**Aus der** DE 10 2006 043599 A1 ist ein elektrischer Zylinder bekannt.

Der Erfindung liegt daher die Aufgabe zugrunde, einen Spindeltrieb weiterzubilden, wobei ein hartes Anschlagen an die axialen Endpositionen der Spindelmutter verhinderbar ist.

Erfindungsgemäß wird die Aufgabe bei dem Spindeltrieb nach den in Anspruch 1 angegebenen Merkmalen gelöst.

Wichtige Merkmale der Erfindung bei dem Spindelantrieb nach Anspruch 1 mit einem Gehäuse, einer Spindel, insbesondere Gewindespindel, Trapezgewindespindel, Kugelumlaufspindel oder Planetenrollspindel, und einer mit der Spindel in Wirkverbindung stehenden Spindelmutter,
wobei die Spindelmutter derart am Gehäuse geführt ist, dass sie bei Drehbewegung der Spindel in Spindelachsrichtung hin- oder her-bewegbar ist,
**wobei** die Spindelmutter zumindest an einer axialen Seite eine Ringnut aufweist oder mit einem Teil verbunden, insbesondere schraubverbunden, ist, welches eine Ringnut aufweist,
wobei am Gehäuse ein ringförmiger Kragen ausgeformt ist,
wobei der Kragen in die Ringnut eindringt oder hineinragt, wenn die Spindelmutter eine zugehörige oder entsprechende, axiale Position erreicht.

Von Vorteil ist dabei, dass ein hartes Anschlagen der Spindelmutter an den beiden axialen Endpositionen verhindert ist, weil das in der Ringnut vorhandene Medium komprimiert wird und somit der Aufschlag abgebremst wird. Das Medium ist entweder Luft, Öl oder ein Öl-Luft-Gemisch.

Wichtige Merkmale eines erfindungsgemäßen Spindelantriebs nach Anspruch 2 sind, dass er mit einem Gehäuse, einer Spindel, insbesondere Gewindespindel, Trapezgewindespindel, Kugelumlaufspindel oder Planetenrollspindel, und einer mit der Spindel in Wirkverbindung stehenden Spindelmutter,
wobei die Spindelmutter derart am Gehäuse geführt ist, dass sie bei Drehbewegung der Spindel in Spindelachsrichtung hin- oder her-bewegbar ist,
**wobei** die Spindelmutter axial beidseitig jeweils eine Ringnut aufweist oder mit einem jeweiligen Teil verbunden, insbesondere schraubverbunden, ist, welches jeweils eine Ringnut aufweist,
wobei am Gehäuse jeweils ein ringförmiger Kragen ausgeformt ist,
wobei der jeweilige Kragen in die jeweilige Ringnut eindringt oder hineinragt, wenn die Spindelmutter eine jeweilige, zugehörige oder entsprechende, axiale Position erreicht.

Von Vorteil ist dabei wiederum, dass ein hartes Anschlagen der Spindelmutter an den beiden axialen Endpositionen verhindert ist, weil das in der Ringnut vorhandene Medium komprimiert wird und somit der Aufschlag abgebremst wird. Das Medium ist entweder Luft, Öl oder ein Öl-Luft-Gemisch.

Bei einer vorteilhaften Ausgestaltung ist zwischen Ringnut und zugeordnetem Kragen ein Spalt vorgesehen bei Eindringen oder Hineinragen des jeweiligen Kragens in die jeweilige Ringnut, insbesondere wenn die Spindelmutter eine jeweilige, zugehörige oder entsprechende, axiale Position erreicht. Von Vorteil ist dabei, dass der Spalt durch Öl abgedichtet wird. Nach der Kompression strömt das komprimierte Medium durch den Spalt heraus und somit wird der Druck abgebaut.

Bei einer vorteilhaften Ausgestaltung wird der Spalt mit Öl bedeckt und somit ein hartes Aufeinanderschlagen der Spindelmutter an den axialen Endpositionen verhindert.

Bei einer vorteilhaften Ausgestaltung ist zumindest teilweise Öl eingefüllt im Spalt zwischen ringförmigem Kragen und der Ringnut. Von Vorteil ist dabei, dass die Ringnut zumindest teilweise gefüllt ist oder zumindest der Spalt mit Öl bedeckt ist und somit abgedichtet ist.

Bei einer vorteilhaften Ausgestaltung ist eine erste Ringnut an einem Zwischenring ausgeformt, welches mit der Spindelmutter verbunden, insbesondere schraubverbunden, ist,

insbesondere welches mittels zumindest einer radial durch den Zwischenring durchgehenden Schraube mit der Spindelmutter schraubverbunden ist, insbesondere wobei die Schraube in eine radial gerichtete Gewindebohrung der Spindelmutter eingeschraubt ist. Von Vorteil ist dabei, dass die Ringnut mit der Spindelmutter verbunden ist, wobei die Ringachse parallel zur Bewegungsrichtung der Spindelmutter ausgerichtet ist.

Bei einer vorteilhaften Ausgestaltung ist eine zweite Ringnut an einem Ringteil ausgeformt, welches mit einer Kolbenstange schraubverbunden ist, insbesondere wobei hierzu das Ringteil ein Innengewinde und die Kolbenstange ein Außengewinde aufweist,
wobei axial durch einen an der Spindelmutter radial hervorstehenden ringförmigen Kragen durchgehende Verbindungsschrauben in eine jeweilige axial gerichtete Gewindebohrung des Ringteils eingeschraubt sind,
insbesondere wobei die Schraubenköpfe der Verbindungsschrauben an der von dem Ringteil abgewandten Seite des an der Spindelmutter radial hervorstehenden ringförmigen Kragens anliegen,
wobei der Zwischenring in Umfangsrichtung voneinander beabstandete Vertiefungen aufweist, in welche jeweils ein Schraubenkopf hineinragt. Von Vorteil ist dabei, dass mit der Spindelmutter axial beidseitig eine Ringnut verbunden ist, wobei die Ringnut jeweils in einem Teil vorgesehen ist, das mit der Spindelmutter verbunden ist. Ein Einarbeiten einer Nut in die Spindelmutter ist daher unnötig.

Bei einer vorteilhaften Ausgestaltung die Kolbenstange am Gehäuse über ein Gleitlager abgestützt ist. Von Vorteil ist dabei, dass eine sehr große axiale Ausdehnung der Kolbenstange und somit ein sehr großer Verfahrbereich ermöglicht ist.

Bei einer vorteilhaften Ausgestaltung sind Nutensteine, insbesondere aus Kunststoff gefertigte Nutensteine, mit dem Ringteil schraubverbunden und in einer am Gehäuse angeordneten Nut geführt sind. Von Vorteil ist dabei, dass die Nutensteine sehr geringe Reibungsverluste bewirken, da der weiche Kunststoff der Nutensteine ein Gleitlager zum Gehäuse hin einfach realisierbar ist.

Bei einer vorteilhaften Ausgestaltung ist das Gehäuse aus metallischen Gehäuseteilen gebildet. Von Vorteil ist dabei, dass der Spindeltrieb eine hohe Belastung aushält.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

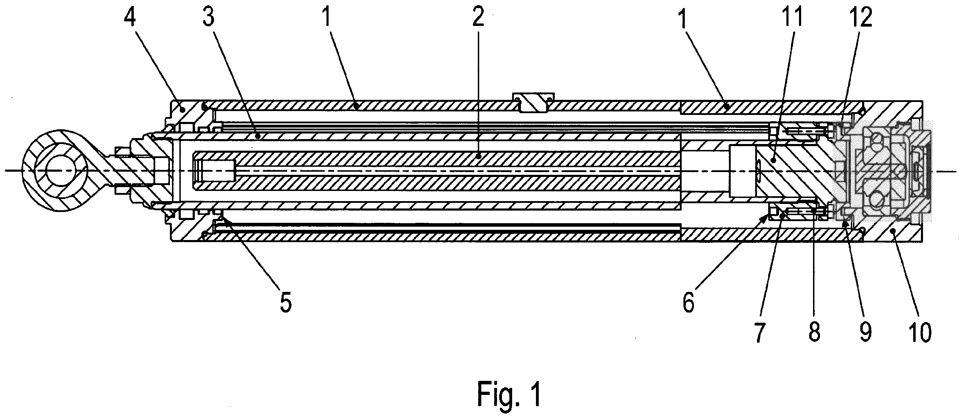

In der Figur 1 ist als erstes erfindungsgemäßes Ausführungsbeispiel ein erfindungsgemäßer Linearantrieb, insbesondere Spindelantrieb, in Schnittansicht gezeigt.

In der Figur 2a ist ein vergrößerter Ausschnitt in einer ersten Orientierung im Gravitationsfeld gezeigt.

In der Figur 2b ist ein vergrößerter Ausschnitt in einer zweiten Orientierung im Gravitationsfeld gezeigt.

In der Figur 2c ist ein vergrößerter Ausschnitt in einer dritten Orientierung im Gravitationsfeld gezeigt.

In der Figur 2d ist ein vergrößerter Ausschnitt in einer vierten Orientierung im Gravitationsfeld gezeigt.

In der Figur 3 ist der entsprechende vergrößerte Ausschnitt eines zweiten erfindungsgemäßen Ausführungsbeispiels gezeigt.

In der Figur 4 ist als weiteres erfindungsgemäßes Ausführungsbeispiel ein erfindungsgemäßer Linearantrieb, insbesondere Spindelantrieb, in Schnittansicht gezeigt.

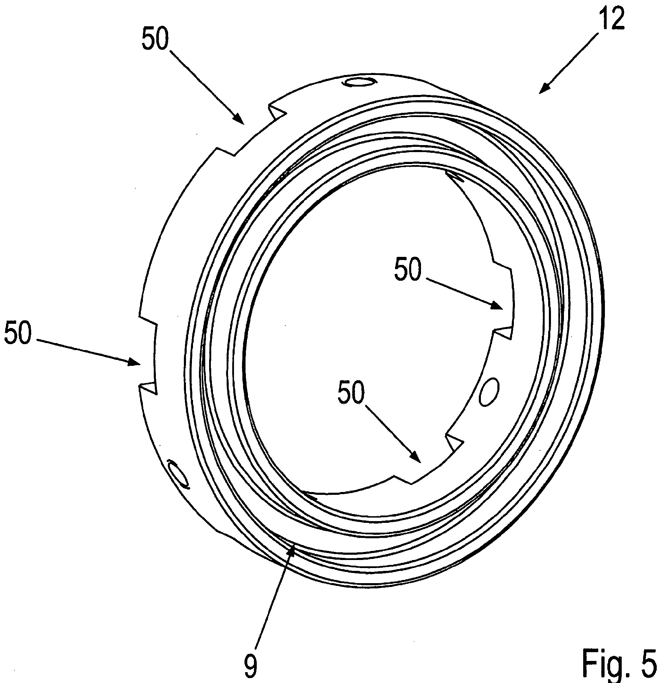

In der Figur 5 ist ein in Figur 1 eingesetzter Zwischenring 12 in Schrägansicht in einer ersten Blickrichtung gezeigt.

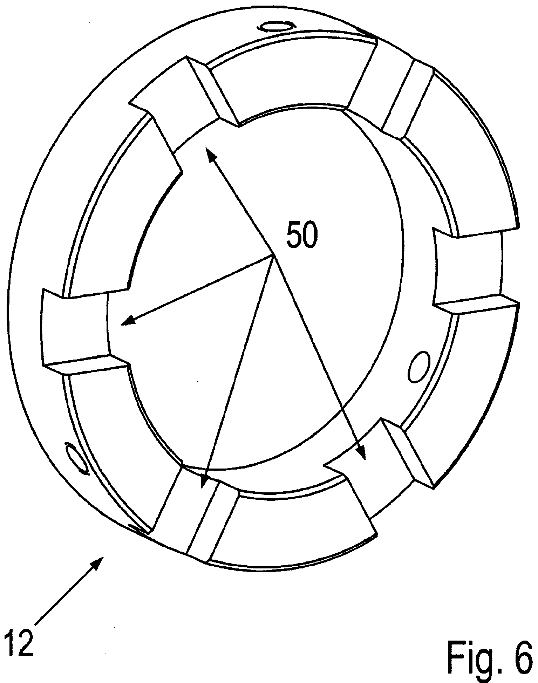

In der Figur 6 ist der Zwischenring 12 in Schrägansicht in einer anderen Blickrichtung gezeigt.

Wie in den Figuren gezeigt, weist der Spindelantrieb ein Gehäuseteil 1 auf, welches abtriebsseitig mit einem Gehäuseteil 4 verbunden ist und antriebsseitig mit einem Gehäuseteil 10, insbesondere Lagerflansch, in welchem ein Lager 43 aufgenommen ist, welches die Spindel 2 des Spindelantriebs lagert.

Die Spindel 2 ist über eine Kupplung mit der Rotorwelle eines nicht dargestellten Elektromotors verbunden. Die Rotorwelle ist drehbar gelagert in einem Gehäuse des Elektromotors, wobei das Gehäuse schraubverbunden ist mit dem Gehäuseteil 10.

Somit ist die Spindel 2 vom Elektromotor in Drehbewegung versetzbar. Die Spindel 2 weist ein Außengewinde auf und/oder ist vorzugsweise als Kugelumlaufspindel, Trapezgewindespindel oder als Planetenrollspindel ausgeführt.

Eine Spindelmutter 11 weist ein Innengewinde auf, das im Eingriff steht mit dem Außengewinde der Spindel 2. Die Spindelmutter 11 ist im Gehäuseteil 1 linear, also in axialer Richtung, also in der zur Achsrichtung der Rotorwelle des Elektromotors parallelen Richtung, geführt. Hierzu weist das Gehäuseteil 1 Führungsnuten auf, in welchen Nutensteine, insbesondere aus Kunststoff ausgeführte Nutensteine, aufgenommen sind, wobei die Nutensteine verbunden sind mit der Spindelmutter 11 oder einem mit ihr fest verbundenen Teil.

Wenn also die Rotorwelle in Drehbewegung versetzt wird, dreht die Spindel 2 mit und somit wird die Spindelmutter 11 linear verschoben, also in axialer Richtung.

An der Spindelmutter 11 ist eine Kolbenstange 3 befestigt, die im Gehäuseteil 4 abgestützt ist mittels eines Gleitlagers 42. Außerdem ist zwischen Kolbenstange 3 und Gehäuseteil 4 ein Abstreifer 41 und eine axial zwischen dem Abstreifer 41 und dem Gleitlager 42 angeordnete Dichtung 40 angeordnet.

An der Spindelmutter 11 ist ein Ringteil 7 mittels axial ausgerichteter Verbindungsschrauben 8 schraubverbunden. Die Schraubenköpfe der Verbindungsschrauben 8 sind an dem dem Elektromotor zugewandten Endbereich der Verbindungsschrauben 8 angeordnet.

Das Ringteil 7 weist eine Ringnut 6 auf, deren Ringachse koaxial zur Achse der Spindel 2 oder der Rotorwelle des Elektromotors ausgerichtet ist. Die Ringnut ist also geöffnet zu der vom Elektromotor abgewandten Seite des Elektromotors.

Ebenso ist ein Zwischenring 12 an der zum Motor zugewandten Seite der Spindelmutter 11 mit der Spindelmutter 11 verbunden. Dabei deckt der Zwischenring 12 die Schraubenköpfe der Verbindungsschrauben 8 ab. Hierzu weist der Zwischenring 12 axial gerichtete Vertiefungen 50 auf, in welche die Schraubenköpfe hineinragen. Der mit der Spindelmutter drehfest verbundene Zwischenring 12 weist eine zum Motor hin geöffnete Ringnut 9 auf.

Bei Anfahren der motorseitigen axialen Endposition dringt ein am Gehäuseteil 10 ausgeformter ringförmiger Kragen in die Ringnut 9 ein.

Der Zwischenring 12 ist mittels zumindest einer radial durchgehenden Schraube 44, insbesondere Madenschraube, mit der Spindelmutter 11 verbunden.

Die Vertiefungen 50 sind in Umfangsrichtung voneinander beabstandet, insbesondere voneinander regelmäßig beabstandet. Die Vertiefungen 50 sind also auf der der Spindelmutter 11 zugewandten Seite des Zwischenrings 12 angeordnet. Auf der von der Spindelmutter 11 abgewandten Seite des Zwischenrings 12 ist die Ringnut 9 angeordnet.

Somit ist also mit der Spindelmutter 11 auf ihrer axial vom Motor abgewandten Seite eine Ringnut 6 und auf ihrer axial dem Motor zugewandten Seite eine Ringnut 9 angeordnet.

An den axialen Endpositionen, also an der vom Motor weitest entfernten axialen Position und an der dem Motor nächstmöglichen axialen Position wird ein hartes Anschlagender Spindelmutter 11 und der mit ihr verbundenen Teile an das jeweilige Gehäuseteil (4, 10) verhindert, indem der am jeweiligen Gehäuseteil (4, 10) ausgeformte jeweilige ringförmige Kragen in die entsprechende Ringnut (6, 9) eintaucht.

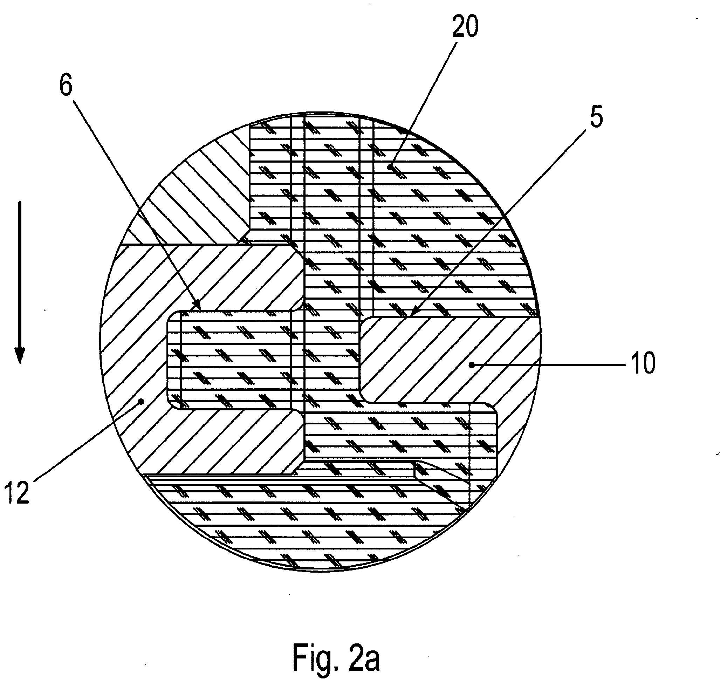

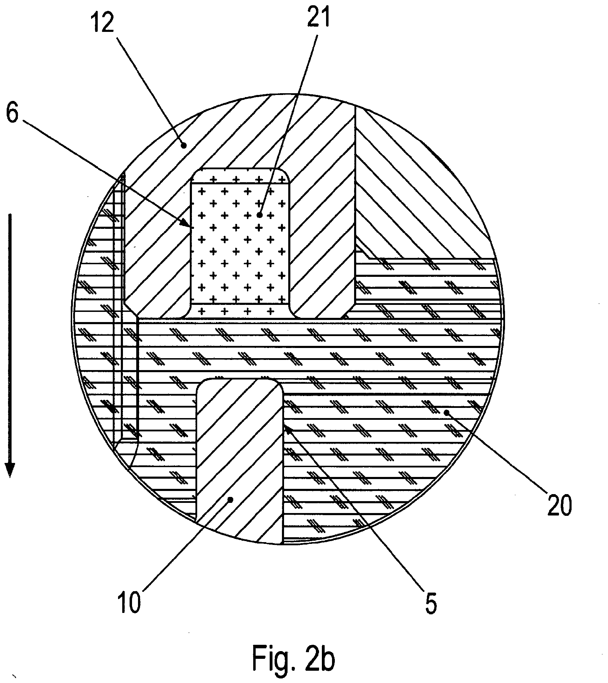

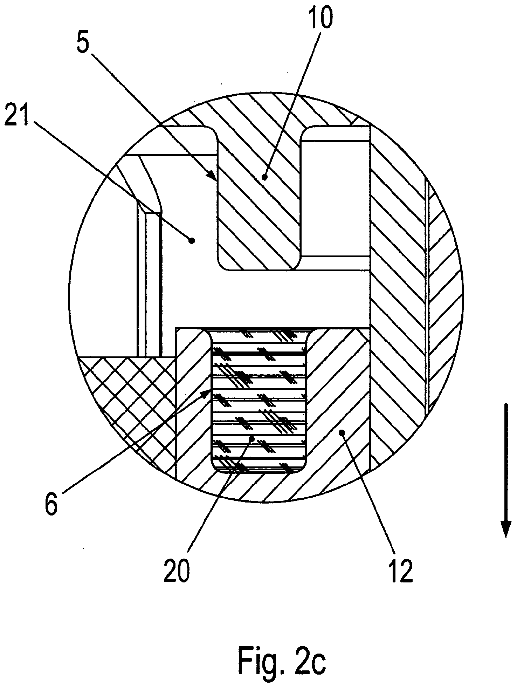

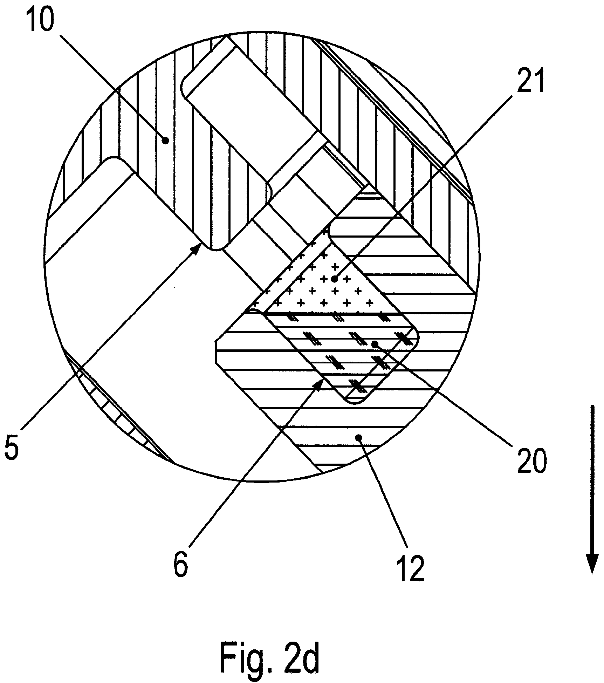

Wie in den Figuren 2a, 2b, 2c, 2d dargestellt, befindet sich vor dem Auftreffen des jeweiligen ringförmigen Kragens in der jeweils entsprechenden Ringnut (6, 9) eine Ölmenge oder ein Öl-Luft-Gemisch. Dadurch wird bei Eindringen des jeweiligen Kragens in die jeweilige Ringnut (6, 9) ein Zusammenpressen der Menge oder des Gemischs bewirkt, was die Bewegung der Spindelmutter 11 bremst. Dieses Abdämpfen ist besonders effektiv ausführbar, wenn der zwischen Kragen und entsprechender Ringnut (6, 9) zugeordnete Spalt eine geringe Breite aufweist. Eine direkte Berührung der metallischen Teile, also des Kragens und der Wandung der Ringnut (6, 9) sollte aber vorzugsweise vermieden werden.

Wie in Figur 2a gezeigt, ist die Ringnut 6 des Zwischenrings 12 zumindest mit ihrem in Gravitationsrichtung, also in Figur 2a eingezeichneter Pfeilrichtung, unteren Bereich vollständig unterhalb des Ölpegels im Innenraum des Spindeltriebs. Somit ist der in Figur 2a gezeigte Bereich in Öl 20 eingetaucht. Der über dem Ölpegel hervorragende Teil der Ringnut 6 ist mit Luft gefüllt, was nicht dargestellt ist. Beim Eindringen des Kragens 5 in die Ringnut 6 wird das weniger als die Luft kompressible Öl 20 nach oben gepresst und der Luftanteil des so in der Ringnut 6 entstehenden Öl-Luft-Gemisches komprimiert. Bei der in Figur 2a vorliegenden Einbausituation, also der Einbaulage, des Spindeltriebs ist die axiale Richtung quer zur Gravitationsrichtung ausgerichtet. Somit erfolgt auch die Bewegung der Spindelmutter 11 in dieser Richtung, also quer zur Gravitationsrichtung. Der Spalt zwischen Kragen 5 und Ringnut 6 wird auch durch Öl etwas abgedichtet. Mittels des im Spalt sich befindenden abdichtenden Öls ist es dem komprimierten Öl-Luft-Gemisch erschwert zu entweichen.

Wie in Figur 2b gezeigt, ist hier die axiale Richtung senkrecht zur Gravitationsrichtung ausgerichtet. Somit ist die Ringnut 6 mit Luft 21 gefüllt, insbesondere vollständig mit Luft 21 gefüllt, wenn die Spindelmutter von oben ins Ölbad einfährt. Somit fährt der Kragen 5 aus dem Ölbad in die mit Luft 21 gefüllte Ringnut 21 ein. Der Spalt zwischen Kragen 5 und Ringnut 6 wird auch durch Öl abgedichtet. Mittels des im Spalt sich befindenden abdichtenden Öls wird es dem komprimierten Öl-Luft-Gemisch erschwert zu entweichen.

Wie in Figur 2c gezeigt, ist beim Herausfahren der Ringnut 6 aus dem Ölbad die Ringnut 6 mit Öl 20 gefüllt. Dabei verdrängt der Kragen 5 beim Einfahren in die Ringnut 6 das Öl 20, welches aber nur schwerlich aus dem komprimierten Volumen durch den Spalt zwischen Kragen 5 und Nutwandung herausströmt.

Wie in Figur 2d gezeigt, ist bei zur Gravitationsrichtung gewinkelter Ausrichtung des Spindeltriebs, wobei die axiale Richtung einen Winkel zwischen 0° und 90° aufweist, beispielsweise einen Winkel von 45°, nur ein Teil des unteren Teils der Ringnut 6 mit Öl 20 gefüllt.

Somit wird in den in den Figuren 2a, 2b, 2c, 2d gezeigten Ausrichtungen des Spindeltriebs jeweils Öl, Luft und/oder ein Öl-Luft-Gemisch komprimiert und somit der Spindeltrieb 11 abgebremst.

Da axial beidseitig am Spindeltrieb 11 eine Ringnut angeordnet ist, ist das vorgenannte Abbremsen axial beidseitig mit dem jeweils entsprechenden Kragen des Gehäuseteils 4 oder 10 ausführbar.

Vorteil dieser Erfindung ist auch, dass nach Einfahren des jeweiligen Kragens in die jeweilige Ringnut der aufgebaute Druck in der Ringnut sich durch Ausströmen des komprimierten Mediums durch den Spalt abbaut. Somit ist ein einfaches Herausfahren ermöglicht, ohne Überwinden eines Festfahrens des Spindeltriebs. Denn ohne das erfindungsgemäße Abbremsen fährt die Spindelmutter 11 ans Gehäuseteil auf Anschlag und danach baut sich noch eine Verspannung zwischen Innengewinde der Spindelmutter 11 und Außengewinde der Spindel 2 auf, die zu einer Selbsthemmung führt, welche beim späteren Losfahren überwunden werden muss.

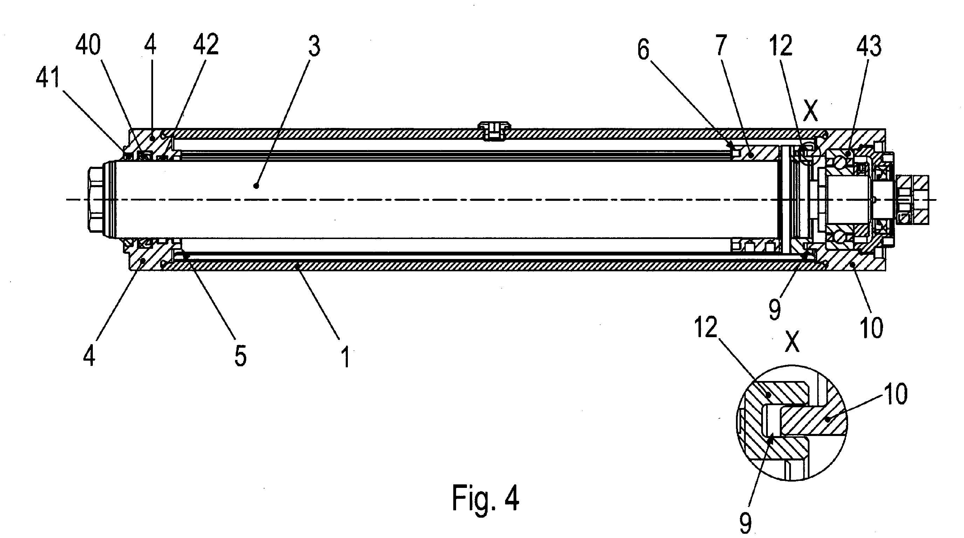

Wie in Figur 4 gezeigt, ist eine erste Ringnut 9 an dem Zwischenring 12 ausgeformt, welcher mit der Spindelmutter 11 verbunden, insbesondere schraubverbunden, ist, wobei der Zwischenring 12 mittels zumindest einer radial durch den Zwischenring 12 durchgehenden Schraube mit der Spindelmutter 11 schraubverbunden ist, wobei die Schraube in eine radial gerichtete Gewindebohrung der Spindelmutter eingeschraubt ist.

Dabei ist eine zweite Ringnut 6 an dem Ringteil 7 ausgeformt, welches mit der Kolbenstange 3 schraubverbunden ist, wobei hierzu das Ringteil 7 ein Innengewinde und die Kolbenstange 3 ein Außengewinde aufweist, wobei axial durch einen an der Spindelmutter 11 radial hervorstehenden ringförmigen Kragen durchgehende Verbindungsschrauben in eine jeweilige axial gerichtete Gewindebohrung des Ringteils 7 eingeschraubt sind, wobei die Schraubenköpfe der Verbindungsschrauben an der von dem Ringteil 7 abgewandten Seite des an der Spindelmutter 11 radial hervorstehenden ringförmigen Kragens anliegen, wobei der Zwischenring 12 in Umfangsrichtung voneinander beabstandete Vertiefungen aufweist, in welche jeweils ein Schraubenkopf hineinragt.

Die Kolbenstange 3 ist am Gehäuse über ein Gleitlager abgestützt.

Die aus Kunststoff gefertigten Nutensteine sind mit dem Ringteil 7 stiftverbunden, insbesondere mit Hohlspannstiften, und/oder schraubverbunden und in einer am Gehäuse angeordneten axial sich erstreckenden Längsnut geführt.

Das Gehäuse ist aus metallischen Gehäuseteilen 4 und 10 sowie dem zwischengeordneten Gehäuseteil 1 gebildet.

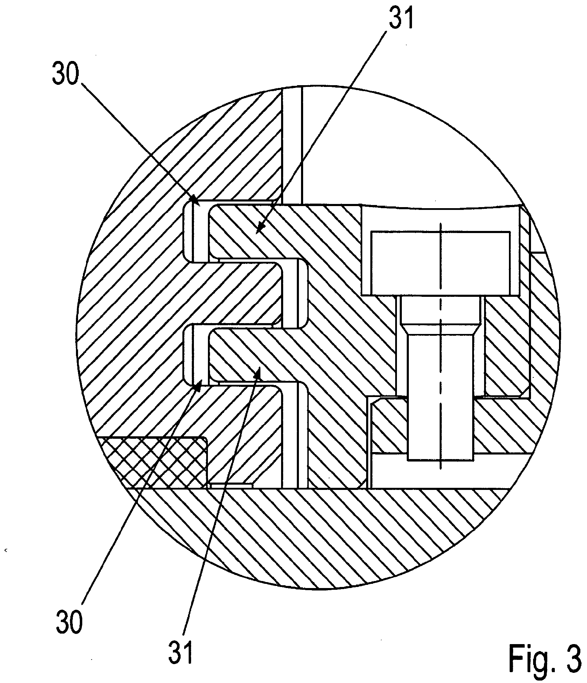

Wie in Figur 3 gezeigt, wird bei einem weiteren erfindungsgemäßen Ausführungsbeispiel die Ringnut 6 und/oder 9 ersetzt durch eine konzentrische Ringnutanordnung 30. Entsprechend wird der am Gehäuseteil 4 oder 10 ausgeformte ringförmige Kragen durch eine konzentrische Anordnung 31 ringförmiger Krägen ersetzt. Auf diese Weise ist ein noch weiter verstärktes Abbremsen erreichbar. Die Anordnungen 31 und 30 der Krägen sind dabei derart angeordnet, dass jeweils ein ringförmiger Kragen der Anordnung 31 in eine der Ringnuten der Anordnung 30 einfahrbar ist.

Bei einem weiteren erfindungsgemäßen Ausführungsbeispiel sind das Ringteil 7 und die Spindelmutter 11 einstückig und/oder einteilig ausgeführt.

### Bezugszeichenliste

1 Gehäuseteil
2 Spindel
3 Kolbenstange
4 Gehäuseteil
5 ringförmiger Kragen am Gehäuseteil 4
6 Ringnut an Ringteil 7
7 Ringteil
8 Verbindungsschraube
9 Ringnut am Zwischenring 12
10 Gehäuseteil, insbesondere Lagerflansch
11 Spindelmutter
12 Zwischenring
20 Öl
21 Luft
30 konzentrische Ringnutanordnung
31 konzentrische Anordnung ringförmiger Kragen
40 Dichtung
41 Abstreifer
42 Gleitlager
43 Lager
50 Vertiefung

## Patentansprüche

1. Spindelantrieb mit einem Gehäuse, einer Spindel (2), insbesondere Gewindespindel, Trapezgewindespindel, Kugelumlaufspindel oder Planetenrollspindel, und einer mit der Spindel (2) in Wirkverbindung stehenden Spindelmutter (11),
wobei die Spindelmutter (11) derart am Gehäuse geführt ist, dass sie bei Drehbewegung der Spindel (2) in Spindelachsrichtung hin- oder her-bewegbar ist,
**dadurch gekennzeichnet, dass**
die Spindelmutter (11) zumindest an einer axialen Seite eine Ringnut (9) aufweist oder mit einem Teil verbunden, insbesondere schraubverbunden, ist, welches eine Ringnut (9) aufweist,
wobei am Gehäuse ein ringförmiger Kragen (5) ausgeformt ist,
wobei der Kragen (5) in die Ringnut (9) eindringt oder hineinragt, wenn die Spindelmutter (11) eine zugehörige oder entsprechende, axiale Position erreicht.

2. Spindelantrieb nach Anspruch 1,
**dadurch gekennzeichnet, dass**
**die Spindelmutter (11) axial beidseitig jeweils eine Ringnut (9) aufweist oder mit einem jeweiligen Teil verbunden, insbesondere schraubverbunden, ist, welches jeweils eine Ringnut (9) aufweist.**

3. Spindelantrieb nach Anspruch 1 oder 2,
**dadurch gekennzeichnet, dass**
zwischen Ringnut (9) und zugeordnetem Kragen (5) ein Spalt vorgesehen ist bei Eindringen oder Hineinragen des jeweiligen Kragens (5) in die jeweilige Ringnut (9), insbesondere wenn die Spindelmutter (11) eine jeweilige, zugehörige oder entsprechende, axiale Position erreicht.

4. Spindelantrieb nach mindestens einem der vorangegangenen Ansprüche,
**dadurch gekennzeichnet, dass**
das Gehäuse einen Innenraum umgibt, in welchem die Spindelmutter (11) angeordnet ist und in welchem zumindest teilweise Öl (20) eingefüllt ist.

5. Spindelantrieb nach mindestens einem der vorangegangenen Ansprüche,
**dadurch gekennzeichnet, dass**
eine erste Ringnut (9) an einem Zwischenring (12) ausgeformt ist, welcher mit der Spindelmutter (11) verbunden, insbesondere schraubverbunden, ist, insbesondere welcher mittels zumindest einer radial durch den Zwischenring (12) durchgehenden Schraube mit der Spindelmutter (11) schraubverbunden ist, insbesondere wobei die Schraube in eine radial gerichtete Gewindebohrung der Spindelmutter (11) eingeschraubt ist.

6. Spindelantrieb nach mindestens einem der vorangegangenen Ansprüche,
**dadurch gekennzeichnet, dass**
eine zweite Ringnut (6) an einem Ringteil (7) ausgeformt ist, welches mit einer Kolbenstange (3) schraubverbunden ist, insbesondere wobei hierzu das Ringteil (7) ein Innengewinde und die Kolbenstange (3) ein Außengewinde aufweist,
wobei axial durch einen an der Spindelmutter (11) radial hervorstehenden ringförmigen Kragen (5) durchgehende Verbindungsschrauben (8) in eine jeweilige axial gerichtete Gewindebohrung des Ringteils (7) eingeschraubt sind,
insbesondere wobei die Schraubenköpfe der Verbindungsschrauben (8) an der von dem Ringteil (7) abgewandten Seite des an der Spindelmutter (11) radial hervorstehenden ringförmigen Kragens (5) anliegen,
wobei der Zwischenring (12) in Umfangsrichtung voneinander beabstandete Vertiefungen (50) aufweist, in welche jeweils ein Schraubenkopf hineinragt.

7. Spindelantrieb nach mindestens einem der vorangegangenen Ansprüche,
**dadurch gekennzeichnet, dass**
die Kolbenstange (3) am Gehäuse über ein Gleitlager (42) abgestützt ist.

8. Spindelantrieb nach mindestens einem der vorangegangenen Ansprüche,
**dadurch gekennzeichnet, dass**
Nutensteine, insbesondere aus Kunststoff gefertigte Nutensteine, mit dem Ringteil (7) stiftverbunden, insbesondere mit Hohlspannstiften, und/oder schraubverbunden sind und in einer am Gehäuse angeordneten Nut geführt sind.

9. Spindelantrieb nach mindestens einem der vorangegangenen Ansprüche,
**dadurch gekennzeichnet, dass**
das Gehäuse aus metallischen Gehäuseteilen (1, 4) gebildet ist.

## Claims

1. A spindle drive with a housing, a spindle (2), in particular threaded spindle, trapezoidal-thread spindle, ballscrew or planetary roller screw, and a spindle nut (11) which is in an operative connection with the spindle (2),
wherein the spindle nut (11) is guided on the housing such that upon a rotary motion of the spindle (2) it can be moved back and forth in the axial direction of the spindle,
**characterised in that**
the spindle nut (11) has at least on one axial side an annular groove (9), or is connected, in particular screw-connected, to a part which has an annular groove (9),
wherein an annular collar (5) is formed on the housing,
wherein the collar (5) penetrates or protrudes into the annular groove (9) if the spindle nut (11) attains an associated or corresponding axial position.

2. A spindle drive according to Claim 1,
**characterised in that**
the spindle nut (11) has axially on either side in each case an annular groove (9), or is connected, in particular screw-connected, to a respective part which has in each case an annular groove (9).

3. A spindle drive according to Claim 1 or 2,
**characterised in that**
a gap is provided between the annular groove (9) and the associated collar (5) when the respective collar (5) penetrates or protrudes into the respective annular groove (9), in particular if the spindle nut (11) attains a respective associated or corresponding axial position.

4. A spindle drive according to at least one of the preceding claims,
**characterised in that**
the housing surrounds an interior in which the spindle nut (11) is arranged and in which oil (20) is at least partially filled.

5. A spindle drive according to at least one of the preceding claims,
**characterised in that**
a first annular groove (9) is formed on an intermediate ring (12) which is connected, in particular screw-connected, to the spindle nut (11),
in particular which is screw-connected to the spindle nut (11) by means of at least one screw which passes radially through the intermediate ring (12), in particular wherein the screw is screwed into a radially directed threaded bore of the spindle nut (11).

6. A spindle drive according to at least one of the preceding claims,
**characterised in that**
a second annular groove (6) is formed on a ring part (7) which is screw-connected to a piston rod (3), in particular with the ring part (7) having an internal thread and the piston rod (3) having an external thread for this purpose,
wherein connecting screws (8) passing axially through an annular collar (5) radially projecting on the spindle nut (11) are screwed into a respective axially directed threaded bore of the ring part (7),
in particular wherein the screw heads of the connecting screws (8) lie against that side of the annular collar (5) radially projecting on the spindle nut (11) which is remote from the ring part (7),
wherein the intermediate ring (12) has indentations (50) spaced apart from each other in the peripheral direction, into which in each case a screw head protrudes.

7. A spindle drive according to at least one of the preceding claims,
**characterised in that**
the piston rod (3) is supported on the housing by means of a plain bearing (42).

8. A spindle drive according to at least one of the preceding claims,
**characterised in that**
sliding blocks, in particular sliding blocks manufactured from plastics material, are pin-connected, in particular with slotted straight pins, and/or screw-connected to the ring part (7) and are guided in a groove arranged on the housing.

9. A spindle drive according to at least one of the preceding claims,
**characterised in that**
the housing is formed from metallic housing parts (1, 4).

## Revendications

1. Entraînement à broche comprenant un carter, une broche (2), en particulier une broche filetée, une broche à filetage trapézoïdal, une vis à billes ou une vis à rouleaux planétaires, et un écrou (11) en liaison opérante avec ladite broche (2),
ledit écrou (11) de broche étant guidé, sur le carter, de façon telle qu'il puisse être animé d'un mouvement d'avance ou de recul lors d'un mouvement rotatoire de la broche (2) dans la direction axiale de ladite broche,
**caractérisé par le fait que**
l'écrou (11) de broche est muni d'une rainure annulaire (9), au moins sur un côté axial, ou bien est relié, notamment par vissage, à une pièce pourvue d'une rainure annulaire (9),
un collet annulaire (5) étant façonné sur ledit carter,
sachant que ledit collet (5) pénètre, ou s'engage dans ladite rainure annulaire (9) lorsque ledit écrou (11) de broche atteint un emplacement axial associé, ou correspondant.

2. Entraînement à broche selon la revendication 1,
**caractérisé par le fait que**
l'écrou (11) de broche est respectivement muni d'une rainure annulaire (9), de part et d'autre dans le sens axial, ou bien est relié, notamment par vissage, à une pièce respective pourvue d'une rainure annulaire (9) respective.

3. Entraînement à broche selon la revendication 1 ou 2,
**caractérisé par le fait**
**qu'**un espace interstitiel est prévu entre la rainure annulaire (9) et le collet (5) associé, lors d'une pénétration ou d'un engagement du collet (5) considéré dans la rainure annulaire (9) considérée, en particulier lorsque l'écrou (11) de broche atteint un emplacement axial associé, ou correspondant.

4. Entraînement à broche selon au moins l'une des revendications précédentes,
**caractérisé par le fait que**
le carter entoure un espace intérieur dans lequel l'écrou (11) de broche est logé, et dans lequel de l'huile (20) est au moins partiellement déversée.

5. Entraînement à broche selon au moins l'une des revendications précédentes,
**caractérisé par le fait**
**qu'**une première rainure annulaire (9) est pratiquée dans une bague intercalaire (12) qui est reliée à l'écrou (11) de broche, notamment par vissage,
et qui, en particulier, est reliée par vissage audit écrou (11) de broche à l'aide d'au moins une vis traversant ladite bague intercalaire (12) dans le sens radial, sachant notamment que ladite vis est vissée dans un perçage taraudé à orientation radiale dudit écrou (11) de broche.

6. Entraînement à broche selon au moins l'une des revendications précédentes,
**caractérisé par le fait**
**qu'**une seconde rainure annulaire (6) est pratiquée dans une pièce annulaire (7) reliée, par vissage, à une tige (3) de piston, sachant notamment que ladite pièce annulaire (7) et ladite tige (3) de piston sont respectivement pourvues, à cette fin, d'un filetage intérieur et d'un filetage extérieur,
sachant que des vis de liaison (8), traversant axialement un collet annulaire (5) faisant radialement saillie au-delà de l'écrou (11) de broche, sont vissées dans un perçage taraudé respectif de ladite pièce annulaire (7), orienté dans le sens axial,
les têtes desdites vis de liaison (8) étant alors notamment en applique contre le côté, pointant à l'opposé de ladite pièce annulaire (7), dudit collet annulaire (5) faisant radialement saillie au-delà de l'écrou (11) de broche,
la bague intercalaire (12) étant dotée de renfoncements (50) distants les uns des autres dans la direction circonférentielle, dans lesquels une tête de vis s'engage à chaque fois.

7. Entraînement à broche selon au moins l'une des revendications précédentes,
**caractérisé par le fait que**
la tige (3) de piston est en appui contre le carter par l'intermédiaire d'un palier de glissement (42).

8. Entraînement à broche selon au moins l'une des revendications précédentes,
**caractérisé par le fait que**
des coulisseaux, notamment des coulisseaux fabriqués en matière plastique, sont reliés à la pièce annulaire (7) par des goupilles, en particulier par des goupilles de serrage creuses, et/ou sont reliés par vissage et sont guidés dans une rainure située sur le carter.

9. Entraînement à broche selon au moins l'une des revendications précédentes,
**caractérisé par le fait que**
le carter est constitué de parties métalliques (1, 4).
